(19) Europäisches Patentamt
European Patent Office
Office européen des brevets

(11) **EP 4 620 742 A1**

(12) **EUROPÄISCHE PATENTANMELDUNG**

(43) Veröffentlichungstag:
**24.09.2025 Patentblatt 2025/39**

(21) Anmeldenummer: **24164569.6**

(22) Anmeldetag: **19.03.2024**

(51) Internationale Patentklassifikation (IPC):
**B60R 16/03** (2006.01)   **B60R 16/023** (2006.01)
**H02H 1/00** (2006.01)   **H02H 3/02** (2006.01)
**H02H 7/26** (2006.01)

(52) Gemeinsame Patentklassifikation (CPC):
**B60R 16/0238; B60R 16/03; H02H 3/025;**
**H02H 7/268;** B60R 16/0239

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Lisa Dräxlmaier GmbH**
**84137 Vilsbiburg (DE)**

(72) Erfinder: **Wortberg, Michael**
**84405 Dorfen (DE)**

(54) **ELEKTRONISCHE STROMVERTEILERANORDNUNG SOWIE VERFAHREN ZUM BETREIBEN EINER SOLCHEN STROMVERTEILERANORDNUNG**

(57)   Die Erfindung betrifft eine elektronische Stromverteileranordnung (100) eines Fahrzeug-Bordnetzes, wobei die Stromverteileranordnung (100) eine Bordnetz-Batterie (200) aufweist, die über eine Batterie-Schalteinheit (201) mit einem Batterie-Lastkanal (202) mit dem Eingang eines Hauptstromverteilers (300) verbunden ist, und wobei am Hauptstromverteiler (300) ausgangsseitig über zumindest eine Hauptstromverteiler-Schalteinheit (301 bis 304) zumindest ein Hauptstromverteiler-Lastkanal (311) angeschlossen ist, der mit dem Eingang eines nachgeordneten Unterstromverteilers (400) verbunden ist, an dem ausgangsseitig über zumindest eine Unterstromverteiler-Schalteinheit (401 bis 406) zumindest ein Unterstromverteiler-Lastkanal (411, 416) angeschlossen ist. Erfindungsgemäß ist jedem der Haupt- und Unterstromverteiler-Lastkanäle (311, 411, 416) eine Fehlerabschalteinrichtung (120) zugeordnet. Mittels der Fehlerabschalteinrichtungen (120) ist bei Detektion eines Fehlerfalls an zumindest einem fehlerbehafteten, insbesondere kurzschlussbehafteten Haupt- oder Unterstromverteiler-Lastkanal (411) ausschließlich eine Fehlerabschaltung der Haupt- oder Unterstromverteiler-Schalteinheit (403) des fehlerbehafteten Haupt- oder Unterstromverteiler-Lastkanals (411) durchführbar, während die Haupt- oder Unterstromverteiler-Schalteinheit (301 bis 304, 401, 402, 404 bis 406) des zumindest einen fehlerfreien Haupt- oder Unterstromverteiler-Lastkanals (411) funktionsfähig, das heißt eingeschaltet bleibt.

Fig. 8

## Beschreibung

### Technisches Gebiet

Die Erfindung betrifft eine elektronische Stromverteileranordnung eines Fahrzeug-Bordnetzes mit einer Sicherheitsschaltung nach dem Oberbegriff des Anspruches 1 sowie ein Verfahren zum Betreiben einer solchen Stromverteileranordnung nach dem Oberbegriff des Anspruches 11.

### Stand der Technik

In einem modernen Fahrzeug wird im Fahrzeug-Bordnetz eine übliche 12V-Verteilung nicht mehr durch eine klassische Stromverteilung mit Schmelzsicherungen durchgeführt, sondern vielmehr mittels einer elektronischen Stromverteileranordnung. Eine solche elektronische Stromverteileranordnung ist als eine hierarchische Verteilerbaumanordnung ausgebildet, und zwar mit einer Bordnetz-Batterie, die über eine Batterie-Schalteinheit einer ersten Ebene mit einem Batterie-Lastkanal mit dem Eingang eines Hauptstromverteilers verbunden ist. Am Hauptstromverteiler sind ausgangsseitig über Hauptstromverteiler-Schalteinheiten einer zweiten, untergeordneten Ebene mehrere Hauptstromverteiler-Lastkanäle angeschlossen, die jeweils mit dem Eingang nachgeordneter Unterstromverteiler verbunden sind. An den Unterstromverteilern sind wiederum ausgangsseitig über Unterstromverteiler-Schalteinheiten einer dritten, nachgeordneten Ebene mehrere Unterstromverteiler-Lastkanäle angeschlossen, die jeweils mit Verbraucherstellen oder gegebenenfalls für weitere nachgeordnete Ebenen einer Verteilerbaumanordnung mit dem Eingang nächster, nachgeordneter Unterstromverteiler verbunden sind.

Zudem weist die Stromverteileranordnung eine Spannungsmesseinrichtung auf. Mit deren Hilfe wird die Versorgungsspannung am Eingang des jeweiligen Stromverteilers in Verbindung mit einem Spannungs-Vergleicherbaustein gemessen. Bei einer erfassten Spannung kleiner als ein vorgegebener Spannungs-Schwellwert wird ein Unterspannungssignal erzeugt.

Mittels der elektronischen Stromverteileranordnung soll insbesondere eine Unterspannungs-Rückwirkung auf Sicherheitsfunktionen durch die Propagation von Kurzschluss-Unterspannungen anderer Lastkanäle im Bordnetz unterbunden werden. Hierzu ist es erforderlich, das ein kurzschlussbehafteter Lastkanal oder ein Lastkanal mit transienter Strom-Überlast sehr schnell im Bereich unter 100 µs abgeschaltet wird. Dabei soll die Fehlerabschaltung derart selektiv sein, dass nur der fehlerbehaftete Lastkanal abgeschaltet wird. Somit wird vermieden, dass ein übergeordnetes Sicherungselement einer übergeordneten Ebene vor oder mit dem fehlerbehafteten Lastkanal abgeschaltet wird und somit ganze Bordnetzanteile von der Versorgung getrennt werden.

Bei Verwendung einer Lithium-Ionen-Bordnetz-Batterie ergeben sich aus folgendem Grund besonders hohe Anforderungen an eine kanalspezifische beziehungsweise kanalselektive Fehlerabschaltung: Während eine Blei-Bordnetz-Batterie eine Überstrom-Belastung ohne große sicherheitskritische Auswirkungen verkraftet, führt bei der Lithium-Ionen-Bordnetz-Batterie bereits eine vergleichsweise geringere Überstrombelastung zu einer sicherheitskritischen Überhitzung, was Kettenreaktionen in den Batterieelementen zur Folge haben kann. Daher weist Lithium-Ionen-Bordnetz-Batterie einen schnell schaltenden Batterie-Schutzschalter mit einer relativen geringen Abschaltschwelle zwischen 500A und 900A, beispielsweise 550A auf. Bei einem Kurzschluss im Bordnetz muss daher ein fehlerbehafteter Lastkanal so schnell abgeschaltet werden, dass bei der Lithiumlonen-Bordnetz-Batterie durch Rückwirkung kein Stromimpuls über der Abschaltschwelle des Batterie-Schutzschalters von zum Beispiel 550A auftritt.

Eine bekannte Lösung dazu basiert auf dem sogenannten eFusing, bei dem in hierarchischen Verteilerbäumen mehrere eFuses (elektronische Sicherungen) kaskadenartig in unterschiedlichen Verteilerebenen angeordnet sind. Eine eFuse weist einen Stromsensor (zum Beispiel einen Shunt) auf. Überschreitet der erfasste Stromwert eine vorgegebene Schwelle, wird der Lastkanal schnell abgeschaltet. Eine solche Überstrom-Abschaltung ist kanalselektiv, das heißt für jeden Lastkanal vorhanden. Zudem ist eine schnelle Unterspannungsabschaltung bekannt, bei der die Spannung an der Eingangsklemme eines Verteilers gemessen wird und bei einer Unterschreitung der Spannung unter einen kritischen Schwellwert, zum Beispiel von 8,5V, alle an dem Verteiler angeschlossenen Verbraucher abgeschaltet werden, so dass damit komplette Bordnetzanteile von der Versorgung getrennt werden.

Der bisherige Lösungsansatz für eine Sicherheitsabschaltung mit kanalselektiven Stromschwellen und einer alternativen allgemeinen, nicht kanalselektiven Unterspannungsabschaltung kann jedoch zu Fehlauslösungen führen: Die Stromsensoren von eFuses weisen nämlich eine Toleranz auf, durch die sich ein Abschaltkorridor ergibt. Wenn Abschalt-Korridore von kaskadiert angeordneten eFuses überlappen, gegebenenfalls in Verbindung mit Abschalt-Reaktionszeiten, besteht die Gefahr, dass ein übergeordneter Stromverteiler und nicht nur der fehlerbehaftete Stromkanal abgeschaltet wird.

Eine Fehlerauslösung ist auch möglich, wenn ein Grundlast-Bias zur Überschreitung der Abschaltschwelle im Hauptstromverteiler oder in der Lithium-Ionen-Bordnetz-Batterie führt.

Eine weitere Fehlerquelle besteht darin, dass bei dem vorstehenden Lösungsansatz die kanalselektive Überstromschwelle in vielen Kurzschluss-Fällen erst nach der, eine umfangreiche Abschaltung bewirkenden Unterspannungsabschaltung erreicht wird und damit als kanalselektive Sicherheitsfunktion unwirksam ist. Die Unterspannung bei einem Kurzschluss stellt sich wegen induktiver Anteile im Spannungsteiler mit einem Spannungsabfall $U_L = L * dI/dt$ sofort sein. Der Strom I(t) baut sich dagegen bis zur Erreichung der kanalselektiven Überstromschwelle rampenförmig langsamer auf, was bis 1 ms dauern kann. Eine allgemeine Unterspannungsabschaltung erfolgt gegebenenfalls bereits zeitlich vor einer kanalselektiven Überstromabschaltung, so dass dann eine kanalselektive Abschaltung nur des Lastkanals mit Fehler nicht gegeben ist.

Beim bisherigen Lösungsansatz mit kanalselektiven Überstromschwellen ist zudem eine sehr hohe Strommessgenauigkeit erforderlich, die sehr teuer in der Umsetzung ist.

**Beschreibung der Erfindung**

Die Aufgabe der Erfindung besteht darin, eine elektronische Stromverteileranordnung für ein Fahrzeug-Bordnetz bereitzustellen, bei der eine im Vergleich zum Stand der Technik betriebssichere sowie einfach aufgebaute Fehlerabschaltung eines fehlerbehafteten Lastkanals durchführbar ist.

Die Aufgabe wird mit den Merkmalen des Anspruches 1 oder des Anspruches 11 gelöst. Bevorzugte Weiterbildungen der Erfindung sind in den Unteransprüchen offenbart.

Die Erfindung betrifft eine elektronische Stromverteileranordnung eines Fahrzeug-Bordnetzes, die eine Bordnetz-Batterie aufweist, die über eine Batterie-Schalteinheit mit einem Batterie-Lastkanal mit dem Eingang eines Hauptstromverteilers verbunden ist. Am Hauptstromverteiler ist ausgangsseitig über zumindest eine Hauptstromverteiler-Schalteinheit zumindest ein Hauptstromverteiler-Lastkanal angeschlossen, der mit dem Eingang eines nachgeordneten Unterstromverteilers verbunden ist. Am Unterstromverteiler ist ausgangsseitig über zumindest eine Unterstromverteiler-Schalteinheit zumindest ein Unterstromverteiler-Lastkanal angeschlossen. Gemäß dem kennzeichnenden Teil des Anspruches 1 ist jedem der Haupt- und Unterstromverteiler-Lastkanäle eine Fehlerabschalteinrichtung zugeordnet. Mit Hilfe der Fehlerabschalteinrichtungen wird bei Detektion eines Fehlerfalls an zumindest einem fehlerbehafteten, insbesondere kurzschlussbehafteten Haupt- oder Unterstromverteiler-Lastkanal (oder einem Lastkanal mit transienter Stromüberlast) ausschließlich eine Fehlerabschaltung der Haupt- oder Unterstromverteiler-Schalteinheit des fehlerbehafteten Haupt- oder Unterstromverteiler-Lastkanals durchgeführt. Die Haupt- oder Unterstromverteiler-Schalteinheit des zumindest einen nicht fehlerbehafteten Haupt- oder Unterstromverteiler-Lastkanals bleibt dagegen von der Fehlerabschaltung unbeeinflusst.

In einer technischen Umsetzung kann jede der Fehlerabschalteinrichtungen einen Prüfbaustein aufweisen. Mittels des Prüfbausteins wird der Fehlerfall detektiert, sofern als erstes Abschaltkriterium ein gemeinsames, für sämtliche Haupt- und Unterstromverteiler-Lastkanäle erzeugtes Unterspannungssignal und als zweites Abschaltkriterium ein ausschließlich, das heißt insbesondere kanalselektiv, für den fehlerbehafteten Haupt- oder Unterstromverteiler-Lastkanals erzeugtes, insbesondere positives Übergradientensignal vorliegt.

Bei gleichzeitigem Vorliegen des Unterspannungssignals und des Übergradientensignals wird mittels des Prüfbausteins der Fehlerabschalteinrichtung des fehlerbehafteten Haupt- oder Unterstromverteiler-Lastkanals ein Triggersignal erzeugt. Mit dem Triggersignal wird die Fehlerabschaltung der Haupt- oder Unterstromverteiler-Schalteinheit des fehlerbehafteten Haupt- oder Unterstromverteiler-Lastkanals durchgeführt.

Zur Erzeugung des Unterspannungssignals kann jede der Fehlerabschalteinrichtungen in Signalverbindung mit zumindest einer Spannungsmesseinrichtung sein, mit der eine Spannung am Eingang des Haupt- und/oder Unterstromverteilers erfassbar ist. Die erfasste Spannung wird in einem Spannungs-Vergleicherbaustein mit einem vorgegebenen Spannungs-Schwellwert verglichen. Der Spannungs-Vergleicherbaustein erzeugt das Unterspannungssignal, sofern im Fehlerfall die erfasste Spannung kleiner als der vorgegebene Spannungs-Schwellwert ist.

Zur Erzeugung des Übergradientensignals kann jede der Fehlerabschalteinrichtungen eine Gradienten-Messeinrichtung aufweisen. Mittels der Gradienten-Messeinrichtung wird im zugeordneten Haupt- und Unterstromverteiler-Lastkanal ein Laststromgradient entsprechend einer zeitlichen Änderungsrate des erfassten Laststroms erfasst oder ermittelt. Der Laststromgradient ist in einem Gradienten-Vergleicherbaustein mit einem vorgegebenen Gradienten-Schwellwert vergleichbar. Der Gradienten-Vergleicherbaustein erzeugt das Übergradientensignal, sofern im fehlerbehafteten Haupt- oder Unterstromverteiler-Lastkanal der Laststromgradient größer als der vorgegebene Gradienten-Schwellwert ist.

Jeder der Fehlerabschalteinrichtungen kann außerdem ein Abschaltelement zugeordnet sein, mit dem bei einer Ansteuerung mit dem Triggersignal die Haupt- oder Unterstromverteiler-Schalteinheit des fehlerbehafteten Haupt- oder Unterstromverteiler-Lastkanals abschaltbar ist.

In einer bevorzugten Ausführungsvariante kann der zumindest eine Unterstromverteiler-Lastkanal mit einer Verbraucherstelle verbunden sein. Alternativ und/oder zusätzlich kann der Unterstromverteiler-Lastkanal mit dem Eingang eines nachgeordneten Unterstromverteilers verbunden sein. Die Bordnetz-Batterie kann speziell eine Lithium-Ionen-Bordnetz-Batterie sein, deren Batterie-Schalteinheit einer Strom-Abschaltschwelle in einem Bereich zwischen 500A und 900A, insbesondere bei 550A, aufweisen kann.

Erfindungsgemäß ist das Unterspannungssignal somit ein für alle Haupt- und Unterstromverteiler-Lastkanäle wirksames, erstes Abschaltkriterium; bei zusätzlichem Vorliegen eines stark positiven Übergradientensignals des Stroms, das ein zweites Abschaltkriterium bildet, erfolgt eine kanalselektive Abschaltung. Der Laststromgradient erreicht im Vergleich zu einem relativ langsamen Laststrom-Anstieg sehr schnell einen großen positiven Wert. Daher ist der Laststromgradienten-Schwellwert so auslegbar, dass überlappende Abschaltkorridore vermieden werden.

Zudem ist eine aus dem Stand der Technik alleine auf der UnterspannungsErkennung basierende (gegebenenfalls noch vor der Erfassung einer Überstromschwelle erfolgende) Fehlerabschaltung vermeidbar. Erfindungsgemäß erfolgt nämlich die Fehlerabschaltung nicht alleine bei Vorliegen des Unterspannungssignals, sondern vielmehr in Kombination des Unterspannungssignals mit dem Übergradientensignal. Erfindungsgemäß bildet einerseits die Unterspannungsschwelle eine wirksame Sicherheits-Funktion, während andererseits der Laststromgradient die Selektivität bei der Fehlerabschaltung umsetzt. Im Fehlerfall, das heißt bei einem Kurzschluss in einem der Haupt- und Unterstromverteiler-Lastkanäle, herrscht zwar für alle Haupt- und Unterstromverteiler-Lastkanäle eine Unterspannung. Jedoch ist der Laststromgradient ausschließlich nur für den kurzschlussbehafteten Haupt- oder Unterstromverteiler-Lastkanal stark positiv. Für die restlichen fehlerfreien Haupt- oder Unterstromverteiler-Lastkanäle ist der in den zugeordneten Fehlerabschalteinrichtungen ermittelte Laststromgradient dagegen negativ, so dass eine entsprechende Fehlerabschalt-Auswertung eindeutig möglich ist.

Während mit den vorstehenden Merkmalen eine schnelle Erkennung und Abschaltung von Kurzschlussfehlern und gegebenenfalls transienter Strom-Überlastungen durchführbar ist, ist es zweckmäßig, noch zusätzlich eine Funktion zur Erkennung und Abschaltung langsamer, thermisch wirkender Überstromfehlerfälle zu implementieren.

Die erläuterte elektronische Stromverteileranordnung ist in Verbindung mit unterschiedlichen Bordnetzbatterien verwendbar. Besonders vorteilhaft ist eine solche Stromverteileranordnung in Verbindung mit Lithium-Ionen-Bordnetz-Batterien einsetzbar, bei welchen hohe Anforderungen an einen sicheren Betrieb vorliegen.

Da beim erfindungsgemäßen Lösungsansatz nicht der Laststrom, sondern nur der Laststromgradient ermittelt werden muss, kann auf eine hochexakte und damit teure, absolute Strommessung verzichtet werden. Als Basis zur Ermittlung des Laststromgradienten kann der Spannungsabfall als Differenzspannung, insbesondere Drain-Source-Spannung $U_{DS}$, über einen Schalttransistor, insbesondere einen MOSFET, verwendet werden, der sich proportional zum Laststrom verhält. Die damit erreichbare Genauigkeit ist für die erfindungsgemäße Fehlerabschaltfunktion ausreichend. Die Bestimmung des Laststromgradienten und/oder des Laststroms kann mittels einer zyklischen Messung des Spannungsabfalls erfolgen, wobei eine zyklische Messung der Differenzspannung $U_{DS}$ in µs-Abständen, insbesondere alle 10 µs, erfolgt, während der Laststromgradient über den zeitlichen Differenzspannungs-Gradienten ($dU_{DS}/dt$) und/oder der Laststrom über die Differenzspannung, insbesondere Drain-Source-Spannung $U_{DS}(t)$, ermittelt wird.

Zur Erhöhung der Genauigkeit kann bei der Ermittlung des Laststroms eine Temperaturabhängigkeit berücksichtigt und kompensiert werden. Der so ermittelte Laststrom kann auch zur thermischen Absicherung gegen langsame, thermisch wirkende Überstromfehler verwendet werden. Der Laststrom ist unter Berücksichtigung einer Temperaturabhängigkeit ermittelbar, und zwar mittels folgender Gleichung

$$I(t)=U_{DS}(t)/R_{DSON}(T(t)),$$

wobei

   T die Betriebstemperatur des MOSFETs ist, und
   $R_{DSON}$ ein Einschaltwiderstand des MOSFETs ist.

Sofern der Lastromgradient und der Laststrom über eine zyklische Messung der Differenzspannung ermittelt werden, kann ein Messshunt entfallen. Damit werden Verlustleistungen reduziert, welche sonst über ein Entwärmungskonzept abzuführen sind. Daraus ergibt sich die Möglichkeit, einen elektronischen Stromverteiler auf einer vergleichsweise kleinen Platine mit erheblichen Kostenvorteilen umzusetzen.

Die Ermittlung und Berechnung des Differenzspannungs-Gradienten ($dU_{DS}(t)/dt$) und des Lastgradienten ($dI(t)/dt$) kann kostengünstig von einem Controller-Kern eines Mikrocomputers in einem unabhängigen General Timer Modul (GTM) zyklisch, insbesondere alle 10µs, erfolgen. Das General Timer Modul (GTM) ist ein im Mikrocomputer integrierter Schaltkreis, der eine Timer-Funktion bereitstellt. Der Mikrocomputer ist ein Computer, bei dem alle wesentlichen Komponenten wie Prozessor, Speicher, Eingabe- und Ausgabeschnittstelen auf einer einzigen Platine integriert sind.

Zudem kann zusätzlich zur vorstehenden Abschaltlogik für Kurzschlussfehler eine Bordnetz-Überlast-Erkennung vorgesehen werden, mit der gegebenenfalls auch auf Basis und Verwendung vorstehender Daten und Mechanismen eine über Prioritäten gesteuerte Abschaltung von Lasten als Teil des Energiemanagements des Bordnetzes zu dessen Entlastung bei Aufrechterhaltung kritischer Funktionen hoher Priorität durchgeführt wird.

**Figurenbeschreibung**

Nachfolgend wird die Erfindung anhand eines Ausführungsbeispiels beschrieben. Es zeigen:

| Figur 1 | eine erfindungsgemäße elektronische Stromverteileranordnung eines Fahrzeug-Bordnetzes mit Fehlerabschalteinrichtungen, |
| Figur 2 und 3 | jeweils eine aus dem Stand der Technik bekannte elektronische Stromverteileranordnung, |
| Figur 4 | einen zeitlichen Stromanstieg I(t) bei einem Kurzschluss in einem Lastkanal eines elektronischen Stromverteilers zur Erläuterung der Fehlauslösungen nach den Figuren 2 und 3, |
| Figur 5 | ein Diagramm mit dem Stromanstieg I(t) und Spannungsabfall U(t) bei einem Kurzschluss im Unterstromverteiler-Lastkanal, |
| Figur 6 | einen hohen, impulsartigen sowie positiven Laststromgradienten in einem Unterstromverteiler-Lastkanal mit Kurzschluss und einen wesentlich kleineren negativen Laststromgradienten in einem Nachbarkanal, |
| Figur 7 | schematisch die komplexe Kombination von ohmschen und induktiven Komponenten in den einzelnen Lastkanälen, und |
| Figur 8 | eine schematische Schaltungsdarstellung einer erfindungsgemäßen Fehlerabschalteinrichtung für eine kanalselektive Abschaltfunktion bei gleichzeitigem Vorliegen eines Unterspannungssignals und eines Übergradientensignals. |

Die Figuren sind schematische Darstellungen und dienen lediglich der Erläuterung der Erfindung. Gleiche oder gleichwirkende Elemente sind durchgängig mit den gleichen Bezugszeichen versehen. Es versteht sich, dass auch andere Ausführungsformen genutzt und strukturelle oder logische Änderungen vorgenommen werden können, ohne von dem Konzept der vorliegenden Erfindung abzuweichen. Die folgende Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

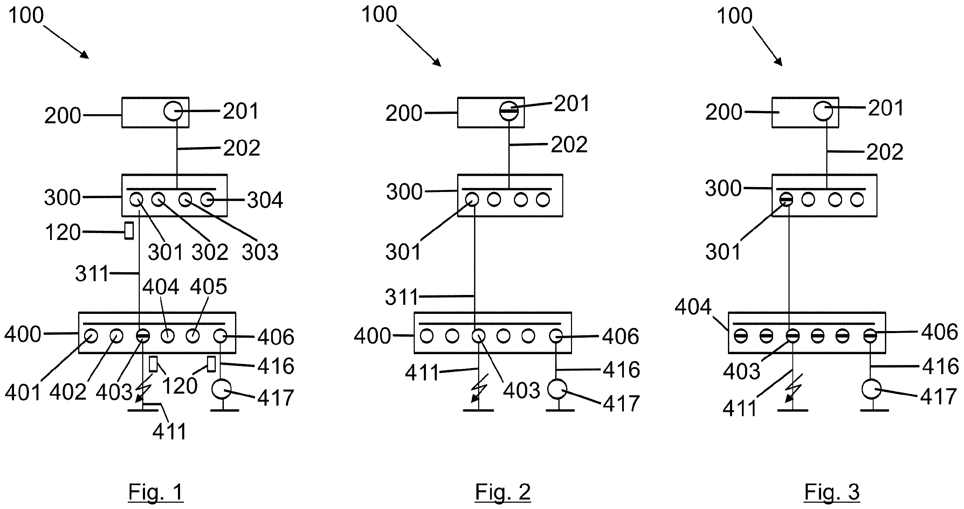

In der Figur 1 ist eine elektronische Stromverteileranordnung 100 eines Fahrzeug-Bordnetzes mit einer Fehlerabschaltung dargestellt, bestehend aus einer Lithium-Ionen-Bordnetz-Batterie 200 und einem daran angeschlossenen Hauptstromverteiler 300, an dem ein Unterstromverteiler 400 angeschlossen ist.

Die elektronische Stromverteileranordnung 100 ist als eine hierarchische Verteilerbaumanordnung ausgebildet, und zwar mit der Lithium-Ionen-Bordnetz-Batterie 200 in einer ersten Ebene. Die Lithium-Ionen-Bordnetz-Batterie 200 ist über eine Batterie-Schalteinheit 201 mit einem Batterie-Lastkanal 202 mit dem Hauptstromverteiler 300 verbunden.

Am Hauptstromverteiler 300 sind über Hauptstromverteiler-Schalteinheiten 301 bis 304 einer zweiten untergeordneten Ebene im vorliegenden Ausführungsbeispiel vier Hauptstromverteiler-Lastkanäle angeschlossen, von denen in der Figur 1 zur besseren Übersichtlichkeit nur der Hauptstromverteiler-Lastkanal 311 eingezeichnet ist.

Am Unterstromverteiler 400 sind über Unterstromverteiler-Schalteinheiten 401 bis 406 einer dritten nachgeordneten Ebene sechs Lastkanäle angeschlossen, von denen zur besseren Übersichtlichkeit lediglich der Unterstromverteiler-Lastkanal 411 und der Unterstromverteiler-Lastkanal 416 mit einer schematisch dargestellten Verbraucherstelle 417, insbesondere mit FUSI-Funktion, eingezeichnet sind.

Die Batterie-Schalteinheit 201 und die Schalteinheiten 301 bis 304 und 401 bis 406 sind lediglich stark schematisch als Kreise dargestellt. Tatsächlich soll es sich um an sich bekannte elektronische Sicherungen (eFuses) mit unterschiedlichen Funktionen handeln, insbesondere um MOSFETs. Bei leeren Kreisen ist die jeweilige Schalteinheit eingeschaltet, das heißt auf Durchgang geschaltet, während bei einem Querstrich im Kreis die jeweilige Schalteinheit sowie der zugeordnete Haupt- oder Unterstromverteiler-Lastkanal abgeschaltet ist. Ein in der Figur 1 (sowie in den Figuren 2 und 3) im Unterstromverteiler-Lastkanal 411 eingezeichnetes Blitz-Symbol weist auf einen Kurzschluss hin, der sich beispielhaft im Unterstromverteiler-Lastkanal 411 ereignet.

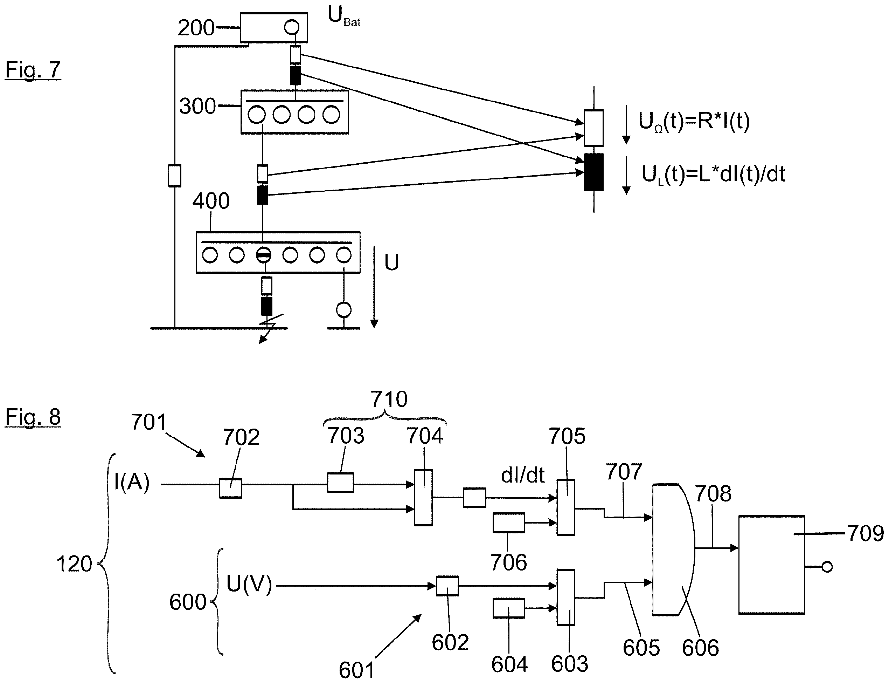

Wie aus der Figur 1 hervorgeht, ist jedem der Haupt- und Unterstromverteiler-Lastkanäle 311, 411, 416 jeweils eine Fehlerabschaltenrichtung 120 zugeordnet. Mit Hilfe der Fehlerabschalteinrichtungen 120 wird ausschließlich, das heißt kanalselektiv, der kurzschlussbehaftete Unterstromverteiler-Lastkanal 411 abgeschaltet, und zwar sicher sowie ohne Rückwirkung auf den übergeordneten Hauptstromverteiler 300 und/oder auf die Batterie-Schalteinheit 201. Dagegen bleiben die anderen Haupt- und Unterstromverteiler-Lastkanäle 311, 416 eingeschaltet, das heißt funktionsfähig. Der grundsätzliche Aufbau und die Funktionsweise einer der erfindungsgemäßen Fehlerabschalteinrichtungen 120 ist weiter unten anhand der Figur 8 erläutert.

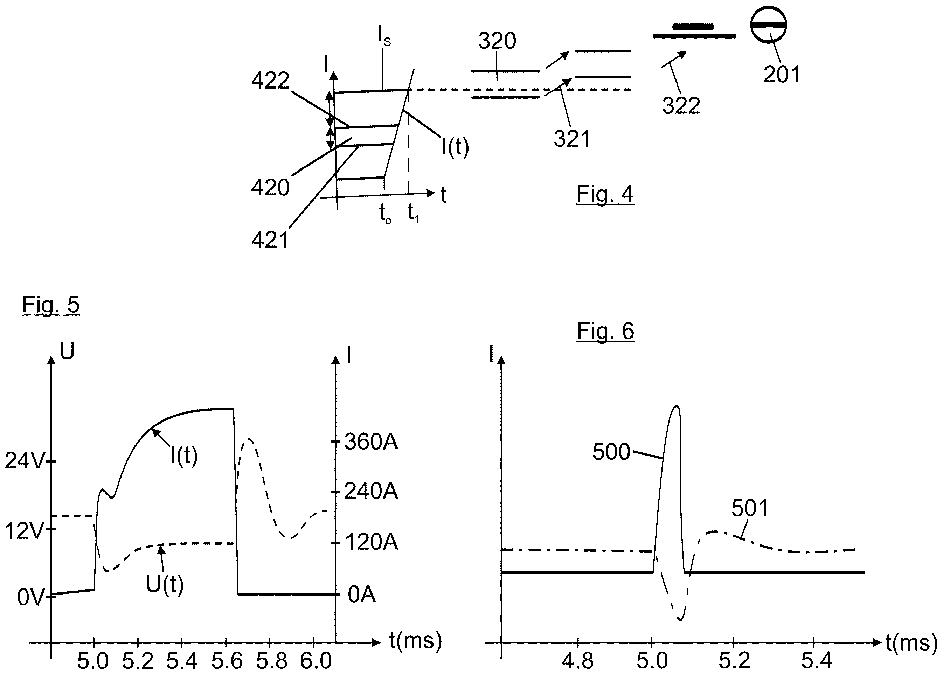

In der Figur 2 ist eine aus dem Stand der Technik bekannte Stromverteileranordnung 100 angedeutet, deren Aufbau und Funktionsweise dem Aufbau und der Funktionsweise der in der Figur 1 gezeigten erfindungsgemäßen Stromverteileranordnung 100 entspricht. Im Unterschied zur Figur 1 ist in der Figur 2 die Stromverteileranordnung 100 jedoch ohne die erfindungsgemäßen Fehlerabschalteinrichtungen 120 ausgestattet. Bei Vorliegen eines Fehlerfalls, das heißt eines Kurzschlusses, im Unterstromverteiler-Lastkanal 411 erfolgen aus dem Stand der Technik bekannte Sicherheitsmaßnahmen. Diese führen in der Figur 2 jedoch - im Unterschied zur Erfindung - zu einer nachteiligen Rückwirkung bis zur Batterie-Schalteinheit 201 der Lithium-Ionen-Bordnetz-Batterie 200, die das gesamte Bordnetz abschaltet. Anhand der Figur 4 wird ein mögliches Szenario erläutert, das nach dem Stand der Technik zu einer solchen, an sich nicht erforderlichen Bordnetz-Abschaltung führen kann:

Demnach ist in der Figur 4 stark schematisiert der Stromanstieg bei einem Kurzschluss im Unterstromverteiler-Lastkanal 411 zum Zeitpunkt $t_0$ gezeigt. Die dem Unterstromverteiler-Lastkanal 411 zugeordnete Unterstromverteiler-Schalteinheit 403 (Figur 2) weist einen (nicht gezeigten) Stromsensor in Verbindung mit einer Strom-Abschaltschwelle auf. Durch Sensortoleranzen im Stromsensor ergibt sich ein im Koordinatensystem der Figur 4 angedeuteter Abschaltkorridor 420, bei dem eine Abschaltung der Unterstromverteiler-Schalteinheit 403 bereits am unteren Korridorende 421 oder alternativ mit etwas Zeitversatz später am oberen Korridorende 422 ausgelöst wird. Zudem verstreicht von der Auslösung bis zur tatsächlichen Abschaltung der Unterstromverteiler-Schalteinheit 403 zum Zeitpunkt $t_1$ noch eine weitere Zeitspanne, in der der Strom I(t) bis zu einem Stromwert Is (Figur 4) ansteigt.

In dem Koordinatensystem der Figur 4, rechte Seite, ist schematisch die Lage eines Schaltkorridors 320 der übergeordneten Hauptstromverteiler-Schalteinheit 301 des Hauptstromverteilers 300 eingezeichnet. Bei einer solchen Lage des Schaltkorridors 320 liegt der Stromwert Is bereits im Schaltkorridor 320. Für diesen Fall tritt die Situation, wie in der Figur 3 dargestellt, ein. Demnach erfolgt sowohl durch die Unterstromverteiler-Schalteinheit 403 als auch durch die Hauptstromverteiler-Schalteinheit 301 eine Abschaltung. Dadurch wird der vom Unterstromverteiler 400 versorgte Bordnetzanteil komplett abgeschaltet.

Eine solche nachteilige Abschaltung des vom Unterstromverteiler 400 versorgten Bordnetzanteils ist in einem nicht von der Erfindung umfassten Vergleichsbeispiel durch folgende Maßnahme unterbindbar: So kann der in dem Koordinatensystem der Figur 4 eingezeichnete Abschaltkorridor 320 höher gelegt werden, wie im Koordinatensystem der Figur 4 mit den Pfeilen 321 angedeutet ist. Dadurch wird der höher gelegten Abschaltkorridor 320 nicht mehr vom Stromwert Is erreicht. Allerdings besteht die Gefahr, dass - wegen der Anhebung des Abschaltkorridors 320 - zur Grundlast an der Lithium-Ionen-Bordnetz-Batterie 200 eine derart hohe Zusatzlast über den Hauptstromverteiler 300 aufaddiert wird, dass die allem übergeordnete Strom-Schaltschwelle der Batterie-Schalteinheit 201 erreicht wird, wie es mit dem Pfeil 322 angedeutet ist. In diesem Fall schaltet die Batterie-Schalteinheit 201 das gesamte Bordnetz ab, wie es in der Figur 2 dargestellt ist.

Eine ähnliche Situation, bei der am Unterstromverteiler 400 sämtliche Unterstromverteiler-Schalteinheiten 401 bis 406 abschalten, liegt vor, wenn für den Unterstromverteiler 400 ein gemeinsames Abschaltkriterium vorliegt und ausgewertet wird. Die vorstehenden Maßnahmen nach dem Stand der Technik sind somit für eine sichere und kanalselektive Abschaltung nicht zielführend, bei der ausschließlich der fehlerbehaftete, das heißt kurzschlussbehaftete Haupt- oder Unterstromverteiler-Lastkanal 311, 411, 416 abgeschaltet werden soll.

In der Figur 5 sind die zeitlichen Verläufe von Strom I(t) und Spannung U(t) bei einem Kurschluss zu einem Zeitpunkt bei 5,0 Millisekunden im kurzschlussbehafteten Unterstromverteiler-Lastkanal 411 (Figur 1) eingezeichnet. Demnach führt der Kurzschluss zu einer Unterspannung. Diese stellt sich aufgrund des induktiven Anteils im Unterstromverteiler-Lastkanal 411, wie in der Figur 7 schematisch dargestellt, mit einem Spannungsabfall

$$U_L(t) = L * dI/dt,$$

wobei L die Induktivität ist, sofort (das heißt unmittelbar nach dem Kurzschluss) ein. Mit dem schematischen Schaltbild gemäß der Figur 7 in Verbindung mit der Figur 5 wird verdeutlicht, wie eine schnelle Unterspannungserkennung erfolgen kann.

Der Strom I(t) baut sich im Diagramm der Figur 5 dagegen nach erfolgtem Kurzschluss relativ langsam auf. Eine im Stand der Technik bereitgestellte Überstromschwelle wird erst nach Ablauf einer Zeitspanne von etwa einer Millisekunde erreicht. Nach dem Ablauf dieser Zeitspanne kann im Stand der Technik jedoch bereits eine nicht notwendige allgemeine Unterspannungsabschaltung erfolgt sein. Durch die erfindungsgemäße Fehlerabschalteinrichtungen 120 wird eine solche nicht notwendige allgemeine Unterspannungsabschaltung verhindert.

In dem Diagramm der Figur 6 ist mit durchgehender Linie 500 ein impulsartiger, hoher positive Laststromgradient dI/dt für den kurzschlussbehafteten Unterstromverteiler-Lastkanal 411 (Figur 1) dargestellt. Der Kurzschluss hat auch einen Einfluss auf den Strom in einem zum kurzschlussbehafteten Unterstromverteiler-Lastkanal 411 benachbarten Unterstromverteiler-Lastkanal, wo der Strom mit einem wesentlich kleineren sowie negativen Laststromgradienten dI/dt abnimmt, wie dies mit der strichpunktierten Linie 501 dargestellt ist. Der Laststromgradient dI/dt im kurzschlussbehafteten Unterstromverteiler-Lastkanal 411 ist deutlich von dem Laststromgradienten dI/dt des fehlerfreien benachbarten Unterstromverteiler-Lastkanals unterscheidbar und damit für die erfindungsgemäße kanalselektive Fehlerabschaltung auswertbar.

In der Figur 8 ist die Softwarearchitektur der Fehlerabschalteinrichtung 120 mit entsprechenden Programmbausteinen vereinfacht in einem Schaltbild dargestellt. Jedem der Haupt- und Unterstromverteiler-Lastkanäle 311, 411, 416 ist jeweils eine solche Fehlerabschalteinrichtung 120 zugeordnet, wie es in der Stromverteileranordnung 100 der Figur 1 grob schematisch angedeutet ist. Die Fehlerabschalteinrichtung 120 weist eine Spannungsmesseinrichtung 600 auf, in der in einem Schaltungszweig 601 die ermittelte Spannung U(V) über einen AD-Wandler 602 einem Spannungs-Vergleicherbaustein 603 zugeführt wird. Deren Spannungs-Schwellwert ist über einen Schwellwerteinsteller 604 einstellbar. Der Spannungs-Vergleicherbaustein 603 erzeugt ein Unterspannungssignal 605, sofern die erfasste Spannung U(V) den Spannungs-Schwellwert unterschreitet. Das Unterspannungssignal 605 wird einem Prüfbaustein 606 zugeführt.

Die in der Figur 8 angedeutete Fehlerabschalteinrichtung 120 weist außerdem eine Gradienten-Messeinrichtung 710 auf, die in einem zweiten Schaltungszweig 701 der Fehlerabschalteinrichtung 120 angeordnet ist. Die Gradienten-Messeinrichtung 710 besteht in der Figur 8 aus einem Zeitglied 703 und einem Rechenbaustein 704 zur Ermittlung eines Laststromgradienten dl/dt in dem jeweiligen Haupt- und Unterstromverteiler-Lastkanäle 311, 411, 416. Ein kanalselektiv, das heißt ein für jeden der Haupt- und Unterstromverteiler-Lastkanäle 311, 411, 416 erfasster oder ermittelter Strom I(A) wird über einen AD-Wandler 702 und dem Zeitglied 703 des Rechenbausteins 704 zugeführt, in der der Laststromgradient dl/dt berechnet wird. Der Rechenbaustein 704 ist in Signalverbindung mit einem Gradienten-Vergleicherbaustein 705, an den ein Schwellwerteinsteller 706 angeschlossen ist. Sofern der Laststromgradient dl/dt einen von dem Schwellwerteinsteller 706 vorgegebenen Gradienten-Schwellwert überschreitet, erzeugt der Gradienten-Vergleicherbaustein 705 ein Übergradientensignal 707, das ebenfalls dem Prüfbaustein 606 zugeführt wird.

Bei gleichzeitigem Vorliegen des Übergradientensignals 707 und des Unterspannungssignals 605 erzeugt der Prüfbaustein 606 ein Triggersignal 708. Das Triggersignal 708 bewirkt mit Hilfe eines nachgeordneten Abschaltelements 709 eine kanalselektive Fehlerabschaltung. Die erfindungsgemäße Fehlerabschaltung erfolgt sehr schnell, und zwar im Vergleich zum Stand der Technik, bei dem eine Strommesseinrichtung nicht den Lastromgradienten dl/dt, sondern den Laststrom I(t) erfasst, der nach Kurzschluss-Eintritt erst nach einer längeren Zeitspanne einen Strom-Schwellwert überschreitet. Bei der erfindungsgemäßen Fehlerabschaltung wird ausschließlich der kurzschlussbehaftete Unterstromverteiler-Lastkanal 411 (Figur 1) abgeschaltet, während die fehlerfreien Haupt- und Unterstromverteiler-Lastkanäle 311, 416 eingeschaltet bleiben.

In einer Weiterbildung kann in der Figur 8 der Laststrom I(A) im Schaltungszweig 701 auch indirekt über den Spannungsabfall eines MOSFETs und damit entsprechend auch ein Laststromgradient dl/dt ermittelt werden.

BEZUGSZEICHENLISTE

| | |
|---|---|
| 100 | elektronische Stromverteileranordnung |
| 120 | Fehlerabschalteinrichtung |
| 200 | Bordnetz-Batterie |
| 201 | Batterie-Trennschalter |
| 202 | Batterie-Lastkanal |
| 300 | Hauptstromverteiler |
| 301 bis 304 | Hauptstromverteiler-Schalteinheiten |
| 311 | Hauptstromverteiler-Lastkanal |
| 320 | Abschaltkorridor |
| 321 | Pfeil |
| 322 | Pfeil |
| 400 | Unterstromverteiler |
| 401 bis 406 | Unterstromverteiler-Schalteinheiten |
| 411, 416 | Unterstromverteiler-Lastkanal |
| 417 | Verbraucherstelle |
| 500 | Linie |
| 501 | strichlierte Linie |
| 600 | Spannungsmesseinrichtung |
| 601 | Schaltungszweig |
| 602 | AD-Wandler |
| 603 | Spannungs-Vergleicherbaustein |
| 604 | Schwellwerteinsteller |
| 605 | Unterspannungssignal |
| 606 | Prüfbaustein |
| 701 | Schaltungszweig |
| 702 | AD-Wandler |
| 703 | Zeitglied |
| 704 | Rechenbaustein |
| 705 | Gradienten-Vergleicherbaustein |
| 706 | Schwellwerteinsteller |
| 707 | Übergradientensignal |
| 708 | Triggersignal |
| 709 | Abschaltelement |
| 710 | Gradienten-Messeinrichtung |

**Patentansprüche**

1. Elektronische Stromverteileranordnung (100) eines Fahrzeug-Bordnetzes, wobei

   - die Stromverteileranordnung (100) eine Bordnetz-Batterie (200) aufweist, die über eine Batterie-Schalteinheit (201) mit einem Batterie-Lastkanal (202) mit dem Eingang eines Hauptstromverteilers (300) verbunden ist, und
   - am Hauptstromverteiler (300) ausgangsseitig über zumindest eine Hauptstromverteiler-Schalteinheit (301 bis 304) zumindest ein Hauptstromverteiler-Lastkanal (311) angeschlossen ist, der mit dem Eingang eines nachgeordneten Unterstromverteilers (400) verbunden ist, an dem ausgangsseitig über zumindest eine Unterstromverteiler-Schalteinheit (401 bis 406) zumindest ein Unterstromverteiler-Lastkanal (411, 416) angeschlossen ist, **dadurch gekennzeichnet,**

**dass** jedem der Haupt- und Unterstromverteiler-Lastkanäle (311, 411, 416) eine Fehlerabschalteinrichtung (120) zugeordnet ist, und dass mittels der Fehlerabschalteinrichtungen (120) bei Detektion eines Fehlerfalls an zumindest einem fehlerbehafteten, insbesondere kurzschlussbehafteten Haupt- oder Unterstromverteiler-Lastkanal (411) ausschließlich eine Fehlerabschaltung der Haupt- oder Unterstromverteiler-Schalteinheit (403) des fehlerbehafteten Haupt- oder Unterstromverteiler-Lastkanals (411) durchführbar ist, während die Haupt- oder Unterstromverteiler-Schalteinheit (301 bis 304, 401, 402, 404 bis 406) des zumindest einen fehlerfreien Haupt- oder Unterstromverteiler-Lastkanals (411) funktionsfähig, das heißt eingeschaltet bleibt.

2. Stromverteileranordnung nach Anspruch 1, **dadurch gekennzeichnet, dass** jede der Fehlerabschalteinrichtungen (120) einen Prüfbaustein (606) aufweist, mittels dem der Fehlerfall detektierbar ist, sofern als erstes Abschaltkriterium ein gemeinsames, für sämtliche Haupt- und Unterstromverteiler-Lastkanäle (311, 411, 416) erzeugtes Unterspannungssignal (605) und als zweites Abschaltkriterium ein ausschließlich, das heißt insbesondere kanalselektiv, für den fehlerbehafteten Haupt- oder Unterstromverteiler-Lastkanals (411) erzeugtes, insbesondere positives Übergradientensignal (707) vorliegt.

3. Stromverteileranordnung nach Anspruch 2, **dadurch gekennzeichnet, dass** bei gleichzeitigem Vorliegen des Unterspannungssignals (605) und des Übergradientensignals (707) mittels des Prüfbausteins (606) der Fehlerabschalteinrichtung (120) des fehlerbehafteten Haupt- oder Unterstromverteiler-Lastkanals (411) ein Triggersignal (708) erzeugbar ist, mit dem die Fehlerabschaltung der Haupt- oder Unterstromverteiler-Schalteinheit (403) des fehlerbehafteten Haupt- oder Unterstromverteiler-Lastkanals (411) durchführbar ist.

4. Stromverteileranordnung nach Anspruch 2 oder 3, **dadurch gekennzeichnet, dass** zur Erzeugung des Unterspannungssignals (605) jede der Fehlerabschalteinrichtungen (120) in Signalverbindung mit zumindest einer Spannungsmesseinrichtung (600) ist, mit der eine Spannung (U(V)) am Eingang des Haupt- und/oder Unterstromverteilers (300, 400) erfassbar ist, dass insbesondere die erfasste Spannung (U(V)) in einem Spannungs-Vergleicherbaustein (603) mit einem vorgegebenen Spannungs-Schwellwert vergleichbar ist, und dass insbesondere mittels des Spannungs-Vergleicherbausteins (603) das Unterspannungssignal (605) erzeugbar ist, sofern im Fehlerfall die erfasste Spannung (U(V)) kleiner als der vorgegebene Spannungs-Schwellwert ist.

5. Stromverteileranordnung nach Anspruch 2, 3 oder 4, **dadurch gekennzeichnet, dass** zur Erzeugung des Übergradientensignals (707) jede der Fehlerabschalteinrichtungen (120) eine Gradienten-Messeinrichtung (710) aufweist, mit der im zugeordneten Haupt- und Unterstromverteiler-Lastkanal (311, 411, 416) ein Laststromgradient (dI(t)/dt) erfassbar ist, dass insbesondere der erfasste Laststromgradient (dI(t)/dt) in einem Gradienten-Vergleicherbaustein (705) mit einem vorgegebenen Gradienten-Schwellwert vergleichbar ist, und dass insbesondere mit dem Gradienten-Vergleicherbaustein (705) das Übergradientensignal (707) erzeugbar ist, sofern im fehlerbehafteten Haupt- oder Unterstromverteiler-Lastkanal (411) der Laststromgradient (dI(t)/dt) größer als der vorgegebene Gradienten-Schwellwert ist.

6. Stromverteileranordnung nach Anspruch 3, 4 oder 5, **dadurch gekennzeichnet, dass** jeder der Fehlerabschalteinrichtungen (120) ein Abschaltelement (709) zugeordnet ist, mit dem bei einer Ansteuerung mit dem Triggersignal (708) die Haupt- oder Unterstromverteiler-Schalteinheit (403) des fehlerbehafteten Haupt- oder Unterstromverteiler-Lastkanals (411) abschaltbar ist.

7. Stromverteileranordnung nach einem der vorhergehenden Ansprüche, **dadurch gekennzeichnet, dass** der zumindest eine Unterstromverteiler-Lastkanal (411, 416) mit einer Verbraucherstelle (417) verbunden ist, und/oder dass der Unterstromverteiler-Lastkanal (411, 416) mit dem Eingang eines nachgeordneten Unterstromverteilers verbunden sind.

8. Stromverteileranordnung nach einem der vorhergehenden Ansprüche, **dadurch gekennzeichnet, dass** die Bordnetz-Batterie (200) eine Lithium-Ionen-Bordnetz-Batterie ist, und dass insbesondere die Batterie-Schalteinheit (201) der Bordnetz-Batterie (200) eine Strom-Abschaltschwelle in einem Bereich zwischen 500A und 900A, insbesondere bei 550A, aufweist.

9. Stromverteileranordnung nach einem der vorhergehenden Ansprüche, **dadurch gekennzeichnet, dass** die Batterie-Schalteinheit (201) und/oder die Haupt- oder Unterstromverteiler-Schalteinheiten (301 bis 304, 401 bis 406) jeweils einen Schalttransistor, insbesondere einen MOSFET, aufweisen, und/oder dass insbesondere die Bestimmung des Laststromgradienten (dI(t)/dt) und/oder des Laststroms (I(t)) mittels einer zyklischen Messung des Spannungsabfalls als Differenzspannung ($U_{DS}$), insbesondere Drain-Source-Spannung, über dem Schalttransistor durchführbar ist, und/oder dass insbesondere sich der Spannungsabfall proportional zum Laststrom (I(t)) verhält, und/oder dass insbesondere die zyklische Messung der Differenzspannung ($U_{DS}$) in μs-Abständen, insbesondere alle 10**μs**, durchführbar ist, und/oder dass der Laststromgradient (dI(t)/dt) anhand des Differenzspannungs-Gradienten ($dU_{DS}(t)/dt$), und/oder der Laststrom (I(t)) anhand der Differenzspannung ($U_{DS}(t)$) ermittelbar ist.

10. Stromverteileranordnung nach Anspruch 9, **dadurch gekennzeichnet, dass** die Ermittlung des Laststroms (I(t)) unter Berücksichtigung einer Temperaturabhängigkeit durchführbar ist, und zwar mittels folgender Gleichung

$$I(t) = U_{DS}(t)/R_{DSON}(T(t)),$$

bei der

T die Betriebstemperatur des MOSFETs, und $R_{DSON}$ ein Einschaltwiderstand des MOSFETs ist.

11. Verfahren zum Betreiben einer elektronischen Stromverteileranordnung (100) eines Fahrzeug-Bordnetzes, insbesondere nach einem der vorhergehenden Ansprüche, wobei

- die Stromverteileranordnung (100) eine Bordnetz-Batterie (200) aufweist, die über eine Batterie-Schalteinheit (201) mit einem Batterie-Lastkanal (202) mit dem Eingang eines Hauptstromverteilers (300) verbunden ist, und
- am Hauptstromverteiler (300) ausgangsseitig über zumindest eine Hauptstromverteiler-Schalteinheit (301 bis 304) zumindest ein Hauptstromverteiler-Lastkanal (311) angeschlossen ist, der mit dem Eingang eines nachgeordneten Unterstromverteilers (400) verbunden ist, an dem ausgangsseitig über zumindest eine Unterstromverteiler-Schalteinheit (401 bis 406) zumindest ein Unterstromverteiler-Lastkanal (411, 416) angeschlossen ist, **dadurch gekennzeichnet,**

**dass** jedem der Haupt- und Unterstromverteiler-Lastkanäle (311, 411, 416) eine Fehlerabschalteinrichtung (120) zugeordnet ist, und dass die Fehlerabschalteinrichtungen (120) bei Detektion eines Fehlerfalls an zumindest einem fehlerbehaften, insbesondere kurzschlussbehafteten Haupt- oder Unterstromverteiler-Lastkanal (411) ausschließlich eine Fehlerabschaltung der Haupt- oder Unterstromverteiler-Schalteinheit (403) des fehlerbehafteten Haupt- oder Unterstromverteiler-Lastkanals (411) durchführen, während die Haupt- oder Unterstromverteiler-Schalteinheit (301 bis 304, 401, 402, 404 bis 406) des zumindest einen nicht fehlerbehafteten Haupt- oder Unterstromverteiler-Lastkanals (411) funktionsfähig, das heißt eingeschaltet bleibt.

Fig. 1

Fig. 2

Fig. 3

Fig. 4

Fig. 5

Fig. 6

EP 4 620 742 A1

Fig. 7

$U_{Bat}$

200

300

400

$U$

$U_\Omega(t)=R*I(t)$

$U_L(t)=L*dI(t)/dt$

Fig. 8

120

701

702

703

704

710

705

dI/dt

706

707

708

709

I(A)

U(V)

600

601

602

603

604

605   606

Europäisches
Patentamt

European
Patent Office

Office européen
des brevets

# EUROPÄISCHER RECHERCHENBERICHT

Nummer der Anmeldung

EP 24 16 4569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 125689 A1 (ELMOS SEMICONDUCTOR SE [DE]) 27. April 2023 (2023-04-27) * Absatz [0035] - Absatz [0324]; Abbildungen 1-56 * | 1-11 | INV. B60R16/03 B60R16/023 H02H1/00 H02H3/02 H02H7/26 |
| A | EP 3 540 893 B1 (YAZAKI CORP [JP]) 13. Mai 2020 (2020-05-13) * Absatz [0038] - Absatz [0092]; Abbildungen 1-5 * | 1-11 | |
| A | DE 10 2021 114689 A1 (HYUNDAI MOTOR CO LTD [KR]; KIA CORP [KR]) 3. März 2022 (2022-03-03) * Absatz [0029] - Absatz [0148]; Abbildungen 1-19 * | 1-11 | |

**RECHERCHIERTE SACHGEBIETE (IPC)**

B60R
H02H

Der vorliegende Recherchenbericht wurde für alle Patentansprüche erstellt

| Recherchenort | Abschlußdatum der Recherche | Prüfer |
|---|---|---|
| Den Haag | 27. August 2024 | Kamara, Amadou |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 4569

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2024

| Im Recherchenbericht angeführtes Patentdokument | Datum der Veröffentlichung | Mitglied(er) der Patentfamilie | Datum der Veröffentlichung |
|---|---|---|---|
| DE 102022125689 A1 | 27-04-2023 | DE 102022125650 A1 | 27-04-2023 |
| | | DE 102022125656 A1 | 27-04-2023 |
| | | DE 102022125689 A1 | 27-04-2023 |
| | | DE 102022125696 A1 | 27-04-2023 |
| EP 3540893 B1 | 13-05-2020 | CN 110271504 A | 24-09-2019 |
| | | EP 3540893 A1 | 18-09-2019 |
| | | JP 6738847 B2 | 12-08-2020 |
| | | JP 2019156178 A | 19-09-2019 |
| | | US 2019283696 A1 | 19-09-2019 |
| DE 102021114689 A1 | 03-03-2022 | CN 114103838 A | 01-03-2022 |
| | | DE 102021114689 A1 | 03-03-2022 |
| | | KR 20220026873 A | 07-03-2022 |
| | | US 2022063414 A1 | 03-03-2022 |

EPO FORM P0461

Für nähere Einzelheiten zu diesem Anhang : siehe Amtsblatt des Europäischen Patentamts, Nr.12/82